Europäisches Patentamt

European Patent Office

Office européen des brevets

(19)

(11) Veröffentlichungsnummer: **0 017 098**
**B1**

(12) **EUROPÄISCHE PATENTSCHRIFT**

(45) Veröffentlichungstag der Patentschrift:
31.08.83

(51) Int. Cl.³: **F 16 H 1/44**

(21) Anmeldenummer: 80101476.2

(22) Anmeldetag: 20.03.80

(54) **Differentialgetriebe.**

(30) Priorität: 22.03.79 PL 214348

(43) Veröffentlichungstag der Anmeldung:
15.10.80 Patentblatt 80/21

(45) Bekanntmachung des Hinweises auf die Patenterteilung:
31.08.83 Patentblatt 83/35

(84) Benannte Vertragsstaaten:
AT DE FR GB IT SE

(56) Entgegenhaltungen:
AT-B-233 974
DE-A-1 625 044
GB-A-1 367 596
US-A-3 430 519
US-A-3 546 968
US-A-4 163 400

(73) Patentinhaber: Politechnika Lodzka, ul. Zwirki 36,
90-924 Lodz (PL)
Patentinhaber: Fabryka Samochodow Rolniczych
"Polmo", ul. Warszawska 349, 61-057 Poznan (PL)

(72) Erfinder: Dzida, Jan, 43-422 Chybie Mnich 244,
Woiwodschaft von Bielsko-Biala (PL)

(74) Vertreter: Füchsle, Klaus, Dipl.-Ing. et al, Hoffmann.
Eitle & Partner Patentanwälte Arabellastrasse 4,
D-8000 München 81 (DE)

Differentialgetriebe

Die Erfindung betrifft ein Differentialgetriebe mit in Funktion des Verhältnisses der Drehgeschwindigkeit der angetriebenen Achswellen veränderlichem Innenreibungsmoment, das insbesondere für die Antriebsachsen von Fahrzeugen bestimmt ist.

Bekannt sind Differentialgetriebe mit erhöhter Innenreibung, die eine Steigerung des Triebradkraftschlusses bis auf die bei einer Starrachse erzielbare Grenze bezwecken.

Die bekannten Differentialgetriebe der Firma Rockwell-Standard Corporation, Automative Division, Detroit, Michigan, und die Differentialgetriebe der Firma Eaton, gemäss dem Bericht von William W. Hoenes, unter dem Titel «A shiftable controlled traction differential for heavy duty trucks», Paper No. 720 905 SAE 1972, mit konstantem Innenreibungsmoment, sind mit einer Lamellenkupplung ausgestattet und zwischen der Achswelle und dem Planetenräderkorb angeordnet.

Bekannt sich auch Differentialgetriebe mit Lamellenkupplung, mit von dem Momente an dem Tellerrad des Hauptgetriebes abhängigem Innenreibungsmoment. Derartige Getriebe sind unter anderen von den Firmen Power-Lok Corporation und Oldsmobile Division aus dem Konzern GMC hergestellt.

Ein Nachteil der Differentialgetriebe ist die Proportionalität des zusätzlichen Reibungsmoments gegenüber dem durch das Hauptgetriebe übertragenen Drehmoment. Dies bewirkt eine geringe Effektivität dieser Lösungen unter den Bedingungen eines schwachen Laufradkraftschlusses. Ist das Moment auf dem Getriebegehäuse klein, erfolgt die Kurvenfahrt bei unsymmetrischer Verteilung der Triebmomente auf die Räder, was die Lenkung des Fahrzeuges erschwert.

Aufgabe der Erfindung ist die Schaffung eines Differentialgetriebes, bei welchem im Falle eines Drehschleuderns eines der Trieblaufräder in dem Differentialgetriebe ein hoher Innenwiderstand entsteht, wodurch der Kraftschluss beider Räder gesteigert wird, und wobei der Wert dieses Momentes mit Momentanwerten der kinematischen Grössen der Getriebeelemente gesteuert werden soll.

Das erfindungsgemässe Differentialgetriebe ist mit einer Mehrscheibenkupplung ausgestattet, deren Aussennabe, welche einen Teil des Differentialgetriebegehäuses bildet, mit der Innennabe über innere und äussere Reibscheiben verbunden ist, ausserhalb welcher axial Schraubendruckfedern angeordnet sind. Im Inneren der Innennabe ist auf der Antriebsachse undrehbar eine polygonale Buchse derart aufgesetzt, dass zwischen deren Umfangswänden und der Zylinderfläche der Innennabe Rollen mit einem Radialspiel untergebracht sind und durch einen mit einer Feder-Zentriereinrichtung versehenen Käfig auf eine elastische Weise in einer zu den Umfangswänden der polygonalen Buchse symmetrischen Lage gehalten werden. Darüber hinaus hat der Käfig einen vorzugsweise kegelförmig ausgebildeten Reibteil mit Flansch, der in dem Differentialgetriebegehäuse in einer Kegelöffnung eingesetzt ist und mit dieser in Reibeingriff treten kann. Der Käfigflansch steht in Berührung mit einer Druckscheibe, die mit gleichmässig auf dem Umfang verteilten, vorzugsweise zwei, Stösseln verbunden ist, deren andere Enden mit einer axial vorspringenden Nocke in Kontakt stehen, die undrehbar gegenüber dem Gehäuse der Antriebsachse montiert ist, wobei deren Stirnfläche mit auf dem Umfang gleichmässig verteilten Eintiefungen versehen ist, deren Anzahl der der Stössel entspricht. Ausserhalb des Differentialgetriebegehäuses ist die Scheibe mit Stösseln verbunden. Zwischen dieser und dem Gehäuse sind Spannfedern untergebracht.

Während einer Geradeausfahrt des Fahrzeuges drehen sich das Differentialgetriebegehäuse und die Achswelle mit gleichen Geschwindigkeiten, mit welchen sich auch die vieleckige Buchse, die Rollen, der Käfig und die Druckscheibe drehen, wobei die Druckscheibe, ausser der Drehbewegung auch geringe, axiale, durch die Zusammenarbeit der Stössel mit der Stirnfläche der axial vorspringenden Nocke bewirkte Bewegungen ausübt. Diese Bewegungen rufen periodische Reibungsschlüsse des Käfigs mit dem Gehäuse hervor, um für die Dauer dieses Kraftschlusses dem Käfig eine der Geschwindigkeit des Differentialgetriebegehäuses gleiche Winkelgeschwindigkeit zu verleihen. Bei einer Kurvenfahrt des Fahrzeugs dreht sich der Käfig mit den Rollen gegenüber der vieleckigen Buchse um einen gewissen Winkel. Jedoch sind die geometrischen Grössen der Nocke und des Radialspiels der Rollen derart gewählt, dass dieser Winkel zu klein ist, um ein Verklemmen der Rollen zu bedingen. Überschreitet das Verhältnis der Drehgeschwindigkeiten der angetriebenen Achswellen den Grenzwert, was nur bei einem grossen Drehschleudern eines der Räder vorkommen kann, schwenkt der Käfig zusammen mit den Rollen gegenüber der vieleckigen Buchse um einen Winkel, der ein Verklemmen der Rollen und den Kraftschluss der Achswellen über die Mehrscheibenkupplung mit dem Gehäuse des Differentialgetriebes bewirkt, was einer Steigerung des Innenreibmomentes des Differentialgetriebes entspricht. Das Ausrücken der Mehrscheibenkupplung aus der Wirkstellung erfolgt in der Folge der Richtungsänderung der Übertragung des Drehmomentes, was das Austreten der Rollen aus dem Klemmzustand und dadurch die Einnahme einer durch die Feder-Zentriereinrichtung erzwungenen, zu den Flächen der mehreckigen Buchse symmetrischen Lage bewirkt.

Das erfindungsgemässe Differentialgetriebe weist die Vorteile eines konventionellen Differentialgetriebes auf, da es unter normalen Betriebsbedingungen auf beide Räder annähernd gleiche Antriebskräfte aufgibt. Es weist darüber hinaus die Merkmale eines Differentialgetriebes mit im Falle des Verlustes des Kraftschlusses eines Rades beträchtlich erhöhter Innenreibung auf, weil das Innenreibmoment stufenweise steigt, und sichert somit eine bessere Ausnutzung des Kraftschlusses der angetriebenen Räder des Fahrzeugs. Die gelegentliche Erhöhung des Innenreibmomentes bewirkt hingegen nur einen kleinen Verschleiss der die Innenreibung steigernden Einrichtung und der Bereifung. Ein weiterer Vorteil der Erfindung ist eine gute Lenkfähigkeit des Fahrzeugs und die Tatsache, dass das Differentialgetriebe seine Funktion sowohl beim Drehschleudern des rechten als auch des linken Rades sowie bei Vor- und Rückwärtsfahrt erfüllt.

Die Erfindung wird nachstehend anhand eines in der Zeichnung dargestellten Ausführungsbeispiels näher erläutert.

Es zeigt:

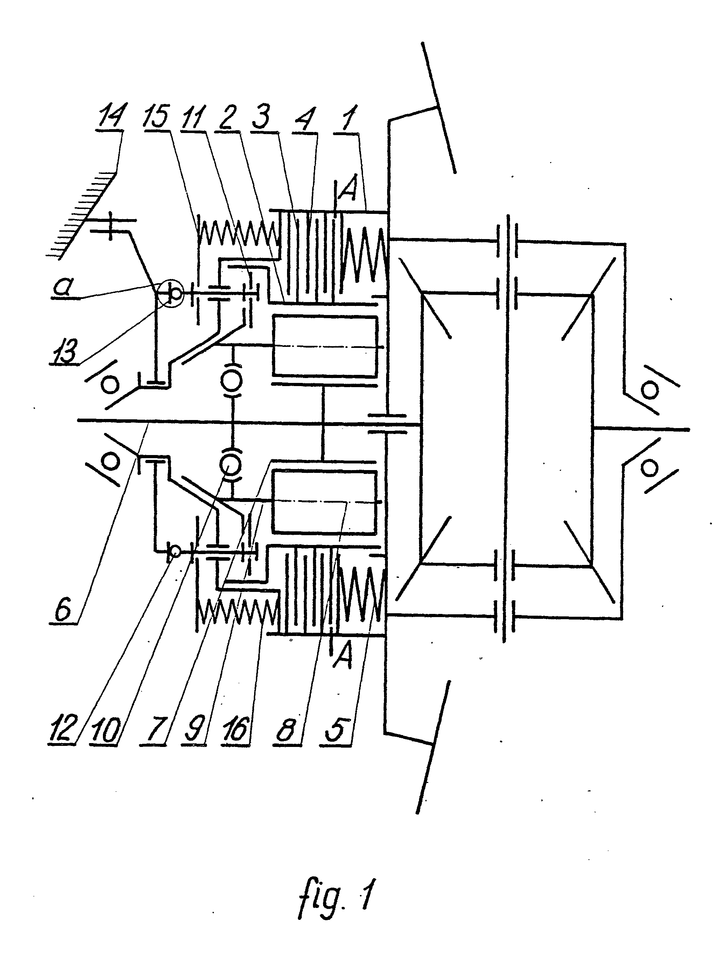

Fig. 1 den schematischen Längsschnitt des Differentialgetriebes,

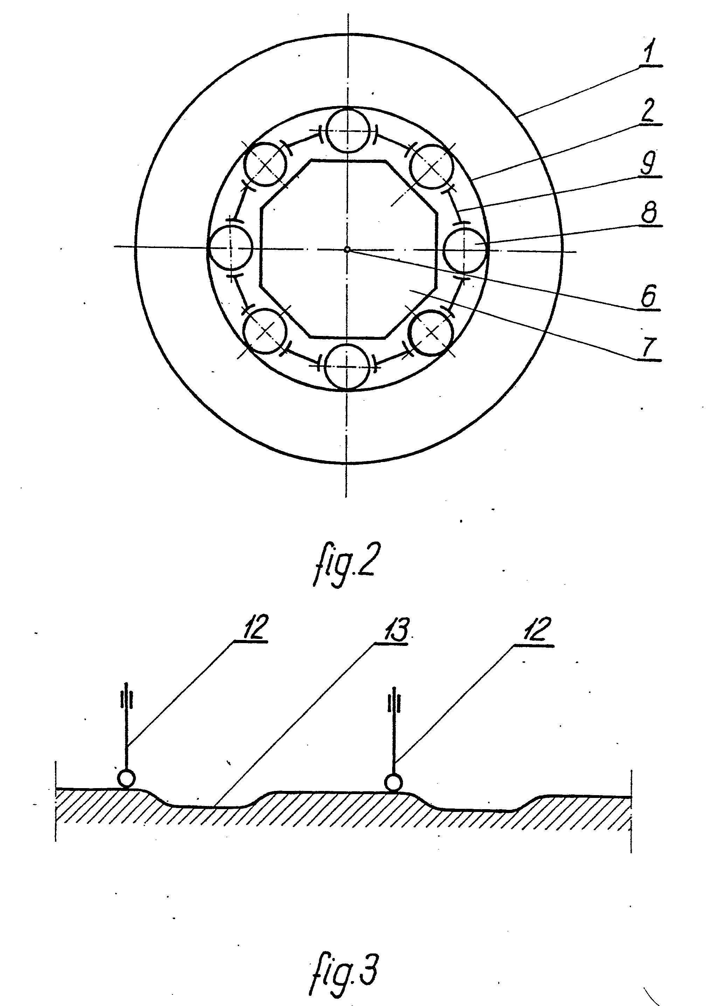

Fig. 2 den schematischen Schnitt A–A nach Fig. 1, und

Fig. 3 eine schematische Abwicklung der in Fig. 1 mit «a» bezeichneten Einzelheit des Getriebes.

Das erfindungsgemässe Differentialgetriebe ist mit einer Mehrscheibenkupplung versehen, deren Aussennabe 1, welche einen Teil des Differentialgetriebegehäuses bildet, mit einer Innennabe 2 verbunden ist, und zwar über innere Reibscheiben 3 und äussere Reibscheiben 4, ausserhalb welcher die Schrauben-Druckfedern 5 axial angeordnet sind. In der Mitte der Innennabe 2 ist auf einer Achswelle 6 undrehbar eine mehreckige Buchse 7 derart aufgesetzt, dass zwischen deren Umfangswänden und der Innen-Zylinderfläche der Nabe 2 mit einem Radialspiel Rollen 8 untergebracht sind, welche durch einen mit einer Zentriereinrichtung 10 versehenen Käfig 9 in einer zu den Umfangswänden der vieleckigen Buchse 7 symmetrischen Lage gehalten werden. Darüber hinaus weist der Käfig 9 einen, vorzugsweise kegelförmig ausgebildeten Reibteil mit Flansch auf, wobei dieser Teil in eine Kegelöffnung des Differentialgetriebegehäuses eingesetzt ist und mit dieser in Reibeingriff treten kann. Der Flansch des Käfigs 9 steht in Kontakt mit einer Druckscheibe 11, welche mit gleichmässig auf dem Umfang verteilten, vorzugsweise zwei, Stösseln 12 in Anlage steht, deren andere Enden in Kontakt mit einer undrehbar gegenüber dem Antriebsachsengehäuse 14 befestigten axial vorspringenden Nocke 13 stehen, wobei die Stirnfläche der Nocke 13 mit gleichmässig auf dem Umfang verteilten Eintiefungen versehen ist, deren Anzahl der der Stössel entspricht. Mit den Stösseln 12 ist eine Scheibe 15 verbunden, zwischen der und dem Gehäuse des Differentialgetriebes die Spannfedern 16 angeordnet sind.

Während einer Vorwärtsfahrt des Fahrzeugs drehen sich das Getriebegehäuse und die Achswelle 6 mit gleicher Geschwindigkeit, mit welcher sich auch die vieleckige Buchse 7, die Rollen 8, der Käfig 9 und die Druckscheibe 11 drehen, wobei die Druckscheibe 11 ausser der Drehbewegung eine geringe, durch die Zusammenarbeit der Stössel 12 mit der Stirnfläche der Nocke 13 hervorgerufene Axialbewegung ausübt. Diese Bewegungen erzeugen nur ein periodisches Moment des Reibkraftschlusses zwischen dem Gehäuse der Antriebsachse und dem Käfig 9.

Während einer Kurvenfahrt des Fahrzeugs schwenkt unter der Einwirkung des periodischen Reibmomentes, periodisch der Käfig 9 samt den Rollen 8 um einen gewissen Winkel gegenüber der vieleckigen Buchse 7. Jedoch sind die geometrischen Grössen der Nocke 13 und des Radialspiels der Rollen 8 so gewählt, dass dieser Winkel zu klein ist, um ein Verklemmen der Rollen 8 zu bedingen. Überschreitet das Verhältnis der Drehgeschwindigkeiten der angetriebenen Achswellen einen bestimmten Wert, was nur bei einem grossen Drehschleudern eines der Räder vorkommen kann, schwenkt der Käfig 9 samt der Rollen 8 gegenüber der vieleckigen Buchse 7 um einen Winkel, der ein Verklemmen der Rollen 8 und der Kraftschluss der Achswellen 6 über die Mehrscheibenkupplung mit dem Gehäuse des Differentialgetriebes bewirkt, was eine beträchtliche Steigerung des Innenreibmomentes des Differentialgetriebes bedingt.

Die Trennung der Achswelle 6 von der Nabe 2 erfolgt in der Folge der Änderung der Übertragungsrichtung des Drehmomentes über die Rollen 8, d. h. also beim Nachlassen der die Rollen im Klemmzustand haltenden Kräfte. Nach Austreten der Rollen 8 aus der Klemmlage, nehmen diese eine durch die Feder-Zentriereinrichtung 10 erzwungene, gegenüber den Umfangswänden der vieleckigen Buchse 7 symmetrische Lage ein.

Das erfindungsgemässe Differentialgetriebe ist sowohl beim Drehschleudern des rechten oder des linken Rades, als auch bei Vor- und Rückwärtsfahrt des damit ausgerüsteten Fahrzeuges wirksam.

## Patentanspruch

Differentialgetriebe mit in Funktion des Verhältnisses der Drehgeschwindigkeiten der angetriebenen Achswellen veränderlichem Innenreibungsmoment, insbesondere für die Antriebsachsen von Fahrzeugen, die mit einer Mehrscheibenkupplung ausgestattet sind, dadurch gekennzeichnet, dass die Aussennabe (1) der Mehrscheibenkupplung, welche einen Teil des Gehäuses des Differentialgetriebes bildet, mit der Innennabe (2) über innere Reibscheiben (3) und äussere Reibscheiben (4) verbunden ist, wobei ausserhalb der Scheiben Schraubendruckfedern (5) axial angeordnet sind, und im Inneren der Nabe (2) auf der Achswelle (6) undrehbar eine vieleckige Buchse (7) derart aufgesetzt ist, dass zwischen ihren Umfangswänden und der inneren Zylinderfläche der Nabe (2) Rollen (8) mit einem Radialspiel untergebracht sind, welche durch einen mit einer Feder-Zentriereinrichtung (10) versehenen Käfig (9) elastisch in einer gegenüber den Umfangswänden der vieleckigen Buchse (7) symmetrischen Lage gehalten sind, wobei überdies der Käfig (9) einen, vorzugsweise kegelförmig ausgebildeten Reibteil mit Flansch hat, der in eine Kegelöffnung in dem Differentialgetriebegehäuse eingesetzt ist und mit dieser in Reibeingriff treten kann, wobei der Flansch des Käfigs (9) in Kontakt mit einer Druckscheibe (11) steht, die mit gleichmässig auf dem Umfang verteilten, vorzugsweise zwei, Stösseln (12) verbunden ist, deren andere Enden in Kontakt mit einer undrehbar gegenüber dem Gehäuse der Antriebsachse (14) montierten axial vorspringenden Nocke (13) stehen, deren Stirnfläche mit gleichmässig auf dem Umfang verteilten Eintiefungen versehen ist, deren Anzahl der der Stössel entspricht, und wobei schliesslich mit den Stösseln (12) eine Scheibe (15) verbunden ist, zwischen welcher und dem Gehäuse Spannfedern (16) angeordnet sind.

**Claim**

A differential gear having internal friction torque, variable as a function of the ratio of the rotary speeds of the driven axle driving shafts, in particular for the driving shafts of vehicles which are equipped with a multiple-disc clutch, characterized in that the outer hub (1) of the multiple-disc clutch, that forms part of the case of the differential gear, is connected to the inner hub (2) by way of inner friction discs (3) and outer friction discs (4), helical compression springs (5) being axially arranged outside the discs, and a polygonal bush (7) being non-rotatably mounted on the axle driving shaft (6) and within the hub (2), with rollers (8) being fitted, with radial play, between the peripheral walls of the bush, on the one hand, and the inner cylindrical surface of the hub (2) on the other, which rollers are resiliently held in a symmetrical position relatively to the peripheral walls of the polygonal bush (7) by means of a cage (9) provided with a spring centering device (10), and, furthermore, the cage (9) having a preferably tapered flanged friction part, which is inserted in a tapered opening in the case of the differential gear and can move into frictional engagement therewith, the flange of the cage (9) being in contact with a pressure disc (11), which is connected to preferably two plungers (12), which are uniformly spaced on the periphery and the other ends of which are in contact with an axially projecting cam (13), which is mounted non-rotatably in relation to the case of the driving shaft (14) and the face of which comprises recesses which are uniformly distributed over the periphery and the number of which corresponds to the number of plungers, and, finally, a disc (15) being connected to the plungers (12), tension springs (16) being arranged between this disc and the case.

**Revendication**

Différentiel à couple de frottement intérieur variable en fonction du rapport des vitesses de rotation des arbres entraînés, en particulier pour les arbres de transmission des véhicules équipés d'un embrayage à disques multiples, caractérisé en ce qu'un moyeu extérieur (1) de l'embrayage à disques multiples, qui constitue une partie du carter de différentiel, est relié par des disques de frottement intérieurs (3) et extérieurs (4) à un moyeu intérieur (2), des ressorts de compression hélicoïdaux (5) étant disposés axialement à l'extérieur des disques et une douille polygonale (7) montée à l'intérieur du moyeu (2) étant calée en rotation sur l'arbre de transmission (6), de sorte qu'entre les parois périphériques de cette douille et la surface cylindrique intérieure du moyeu (2) sont logés, avec un jeu radial, des rouleaux (8) tenus élastiquement à des positions symétriques par rapport aux parois périphériques de la douille polygonale (7) par une cage (9) à moyen de centrage (10) à ressort, cette cage (9) ayant une surface de frottement de préférence conique munie d'une bride et introduite dans un logement conique du carter de différentiel avec lequel elle peut venir en contact de friction, la bride de la cage (9) étant en contact avec un disque de pression (11) associé à des poussoires (12) qui sont de préférence au nombre de deux espacés également en sens circulaire, les autres extrémités de ces poussoirs étant en contact avec une came (13) saillante en sens axial et calée en rotation par rapport à l'enveloppe de l'arbre de transmission (14), la face frontale de cette came présentant des dépressions également espacées circulairement dont le nombre correspond à celui des poussoirs, ces derniers étant finalement réunis à un disque (15) entre lequel et le carter sont montés des ressorts de compression (16).

fig. 1

fig.2

fig.3

7